# EUROPÄISCHE PATENTANMELDUNG

(11) **EP 0 580 959 A1**
(43) Veröffentlichungstag der Anmeldung: **02.02.1994**
(21) Anmeldenummer: 93105910.9
(22) Anmeldetag: 10.04.1993
(51) Int. Cl.: A01L 7/02, A01L 5/00

(54) **Hufsohle für beschlagene Haustiere, z.B. Pferde etc.**

(71) Anmelder: Küttner, Sabine, D-45219 Essen (DE); Kampling, Gerhard Hans, D-45219 Essen (DE)
(72) Erfinder: Küttner, Sabine, D-45219 Essen (DE); Kampling, Gerhard Hans, D-45219 Essen (DE)

(57) **Zusammenfassung**

Die Erfindung betrifft eine Besohlung der Hufe mit Gummisohle, Leder oder anderen Materialien auf ein Hufeisen bei Huftieren aller Art.

## Beschreibung

Die Sohle bei einem beschlagenen Huftier mit Eisen verhindert den Abrieb des Eisens der Lauffläche und gibt dem Pferd eine bessere Trittfestigkeit.

Es kann ausgeschlossen werden, daß beim Weidegang der Pferde, da die Pferde sehr oft ausschlagen, es zu Unfällen kommt, die Verletzungen nach sich ziehen, welches ein Töten der Tiere erforderlich macht, da die Sohlen eine federnde Wirkung haben bzw. Verletzungen in Grenzen halten. Darüberhinaus hat die Sohle auch eine orthopädische Wirkung, da die Beinlänge unterschiedlich variiert und durch die Sohle ausgeglichen werden kann.

Auch weitere Verletzungsgefahren wie beim Transport der Pferde, Springen, Ausritte und Dressur werden weitgehend gemildert, da die unterschiedlichsten Sohlen die Trittfestigkeit beim Regen, auf Asphalt etc. gewährleisten. Auch Verletzungsgefahren für den Menschen durch den direkten Umgang mit dem Huftier werden weitgehend abgemildert.

Auch die Beanspruchung der Gelenke der Tiere wird gemildert, da eine gewisse Federung der Beine durch die Besohlung gewährleistet ist.

Die Erfindung betrifft eine dem Oberbegriff des Patentanspruchs zu 1 entsprechende Besohlung der Hufe mit Gummisohle, Leder oder anderen Materialien auf ein Hufeisen bei Huftieren aller Art.

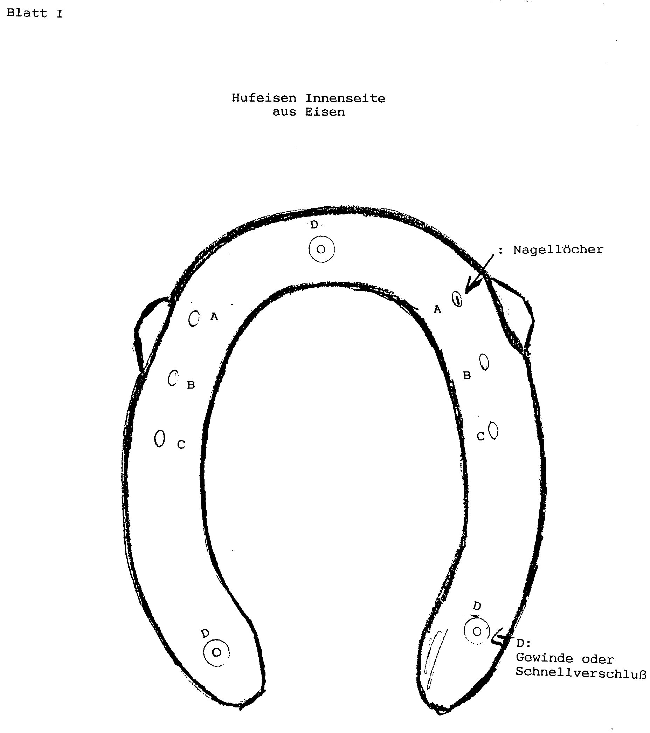

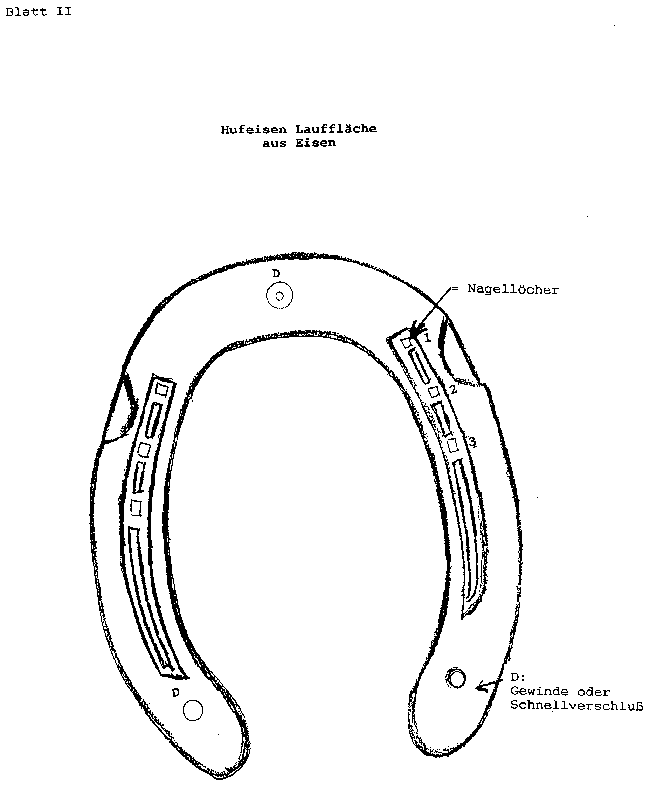

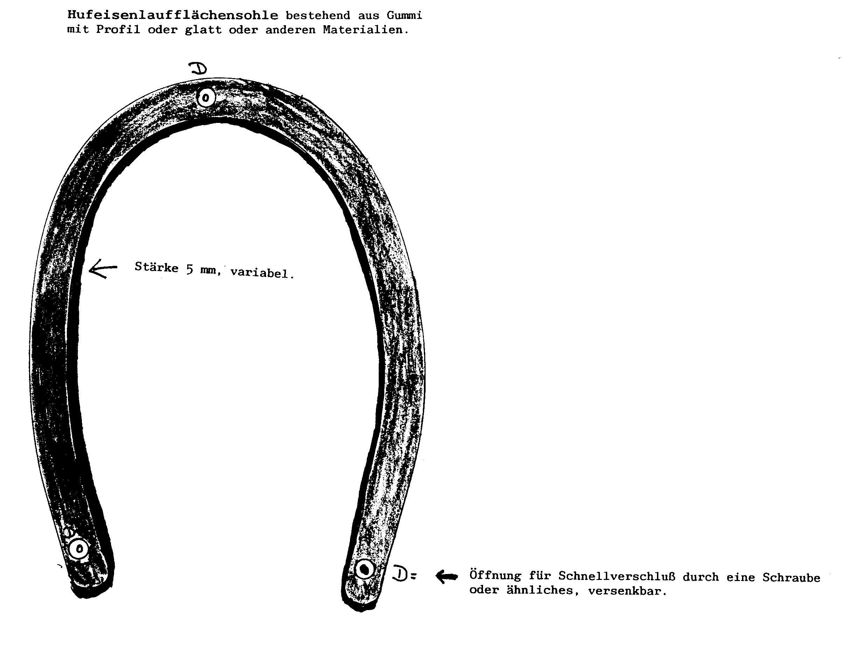

## Patentansprüche

1. Ein beschlagenes Pferd mit Hufeisen an allen 4 Hufen oder nur den vorderen Hufen oder die hinteren Hufe wird eine Sohle auf die Lauffläche des Hufeisen montiert bestehend aus Gummi, Leder oder anderen Materialien mit Profil oder glatt.wie auf Blatt 2 u. 3 deutlich gemacht wird.Die Sohle wird auf Blatt 3 der Anlage kenntlich gemacht.
Die Montage erfolgt durch die auf Blatt 1 und 2 mit D gekennzeichnete Öffnungen im Hufeisen durch Schnellverschluß, Gewinde oder ähnliches die sich ebenfalls in der zu montierenden Sohle befinden. Siehe Blatt 3.
Die Patentansprüche beziehen sich auf die Besohlung eines Hufeisens bezw. der Sohlen aus der entsprechender vorangegangener Beschreibung der Materialien mit einer variablen Stärke und unterschiedlichsten Profilen oder auch glatt.
Auch bei einem unbeschlagenem Huftier kann eine entsprechende Sohle auf dem Huf direkt befestigt werden.
Auch die Befestigung der Sohlen, wie mit D gekennzeichnet, wird angemeldet.
